# EUROPÄISCHE PATENTSCHRIFT

(11) **EP 1 063 127 B1**
(45) Veröffentlichungstag und Bekanntmachung des Hinweises auf die Patenterteilung: **13.04.2005**
(21) Anmeldenummer: 00112890.9
(22) Anmeldetag: 19.06.2000
(51) Int. Cl.: B60R 1/06

(54) **Anordnung zur Reinigung des Spiegelelements eines Aussenrückspiegels**
Cleaning device for a mirror element of an exterior rear view mirror
Dispositif de nettoyage d'un élément miroir d'un rétroviseur extérieur

(30) Priorität: 21.06.1999 DE 19928355
(43) Veröffentlichungstag der Anmeldung: 27.12.2000
(73) Patentinhaber: Donnelly Hohe GmbH & Co. KG, 97903 Collenberg (DE)
(72) Erfinder: Fuchs, Hans-Joachim, 97904 Dorfprozelten (DE); Fürst, Peter, 63927 Bürgstadt (DE); Polzer, Herwig, 63879 Miltenberg (DE)
(74) Vertreter: Tappe, Hartmut

(56) Entgegenhaltungen:
- FR-A- 2 661 380
- US-A- 5 953 158

## Beschreibung

Die Erfindung betrifft eine Anordnung zur Reinigung des Spiegelelements eines Außenrückspiegels nach dem Oberbegriff des Patentanspruchs 1.

Aufgrund der Anordnung der Außenrückspiegel im Seitenbereich eines Kraftfahrzeuges verschmutzen die Spiegelelemente insbesondere bei ungünstigen Witterungsbedingungen, beispielsweise bei Regen oder gesalzten Straßen, relativ schnell. Durch die Verschmutzung des Spiegelelements wird die Beobachtung des nachfolgenden Verkehrs durch den Fahrer beeinträchtigt und somit die Fahrsicherheit herabgesetzt. Bei Überschreitung eines bestimmten Verschmutzungsgrades müssen die Spiegelelemente gereinigt werden, was entweder von Hand erfolgen kann oder im Rahmen einer Autowäsche in einer Autowaschanlage.

Da die Reinigung der Spiegelelemente in der Autowaschanlage aufgrund der ungünstigen Geometrie von Außenrückspiegeln nur unvollständig erfolgt und die Reinigung von Hand eine unkomfortable, zeitaufwendige und schmutzige Tätigkeit darstellt, sind entsprechend der Reinigungssysteme zur Reinigung der Frontscheinschwerfer automatische Reinigungssysteme zur Reinigung der Außenrückspiegel entwickelt worden. Dazu können beispielsweise in den Außenrückspiegel integrierte Scheibenwischer verwendet werden oder Beschichtungen, die die Haftung des Schmutzes auf der Glasoberfläche vermindern. Aus dem Stand der Technik sind auch Lösungen bekannt, bei denen Waschdüsen an verschiedenen Positionen des Kraftfahrzeuges angebracht wurden, um das Spiegelelement durch Aufbringung einer Reinigungsflüssigkeit zu reinigen.

Nachteilig an den bekannten Lösungen zur automatischen Reinigung des Spiegelelementes unter Verwendung von Waschdüsen ist es, daß es bei den meisten Kraftfahrzeugmodellen aufgrund der Gestaltung der Karosserie und der Außenrückspiegel keine Möglichkeit gibt, die Waschdüse in der Art anzuordnen, daß aufgrund eines günstigen Strahlwinkels und eines relativ geringen Abstands zum Spiegelelement eine effektive Reinigungswirkung zu erzielen. Ist die Waschdüse beispielsweise im Spiegelring angeordnet, ergibt sich aufgrund des flachen Strahlwinkels in bezug auf das Spiegelelement eine lediglich ungenügende Reinigungswirkung. Lösungen, bei denen Scheibenwischer zum Einsatz kommen, beeinträchtigen die Sichtfläche, die Verstellmöglichkeiten und die Positionstreue. Auch die Beschichtung der Spiegelglasoberfläche ergibt teilweise nur ungenügende Ergebnisse, insbesondere dann, wenn sich ein Schmutznebel auf dem Glas absetzt, der zusätzlich von einer Spiegelglasheizung eingetrocknet wird.

Aufgabe der vorliegenden Erfindung ist es, eine Anordnung zur Reinigung des Spiegelelements eines Außenrückspiegels vorzuschlagen, die eine verbesserte Reinigungswirkung ermöglicht.

Diese Aufgabe wird durch eine Anordnung nach der Lehre des Patentanspruchs 1 gelöst.

Bevorzugte Ausführungsformen der Erfindung sind Gegenstand der Unteransprüche.

Erfindungsgemäß ist die Waschdüse ortsfest mit der Fahrzeugkarosserie verbunden und das Spiegelelement zumindest zwischen einer Normalposition und einer Reinigungsposition verstellbar. Das bedeutet, daß die Waschdüse an einer Stelle des Kraftfahrzeuges angeordnet ist, deren Lage unabhängig von der Position des Spiegelelements ist. Die Normalposition des Spiegelelements entspricht der Position, in der der nachfolgende Verkehr vom Fahrer im Spiegelelement beobachtet werden kann. Dabei ist es selbstverständlich, daß es abhängig von den Bedürfnissen des jeweiligen Fahrers innerhalb eines bestimmten Stellbereiches verschiedene Normalpositionen gibt. Die Reinigungsposition zeichnet sich dadurch aus, daß sich in der Reinigungsposition ein für die Reinigung des Spiegelelements günstiger, insbesondere steiler, Winkel zwischen der Spiegelebene des Spiegelelements und dem Strahl der Reinigungsflüssigkeit ergibt. Im Ergebnis erlaubt es die erfindungsgemäße Anordnung also, das Spiegelelement aus einer Normalposition in eine Reinigungsposition zu bringen, in der es eine für die Reinigung günstige relative Lage zur Waschdüse einnimmt. Abhängig vom jeweiligen Fahrzeugtyp muß bei der Anwendung der erfindungsgemäßen Anordnung zunächst ein Platz zur Anordnung der Waschdüse und dann ein Verstellmechanismus zur Verstellung des Spiegelelements aus der Normalposition in eine für die bestimmte Anordnung der Waschdüse günstige Reinigungsposition gefunden werden. In welcher Art das Spiegelelement zwischen den beiden Positionen verstellt wird, ist erfindungsgemäß gleichgültig. So kann das Spiegelelement einzeln oder auch zusammen mit einem umgebenden Spiegelgehäuse verstellt werden.

An welcher Stelle des Kraftfahrzeuges die Waschdüse angeordnet wird, ist grundsätzlich beliebig. Denkbar ist es, die Waschdüse im Türblech oder einem Dichtgummi zu befestigen. Eine besonders kostengünstige Montage wird dadurch ermöglicht, daß die Waschdüse an einem Spiegelfuß und/oder an einer Spiegelfußkappe angeordnet ist. Dadurch kann die Waschdüse bereits bei der Vormontage der verschiedenen Komponenten eines Außenrückspiegels eingebaut werden, so daß bei der Montage des Außenrückspiegels am Kraftfahrzeug nur noch der Anschluß der Waschdüse an das Reinigungsflüssigkeitssystem des Fahrzeugs erforderlich ist. Dieser Anschluß kann mittels herkömmlicher fluiddichter Schlauchverbindungen oder aber auch über Koppeleinrichtungen erfolgen, die unmittelbar bei der Montage des Spiegels durch einfaches Aufstecken eine fluiddichte Steckverbindung herstellen.

Bei den meisten modernen Kraftfahrzeugen bildet der Spiegelfuß und/oder die Spiegelfußkappe, mittels dem bzw. der die Außenspiegelanordnung am Fahrzeug befestigt ist, das Fensterdreieck eines der vorderen Seitenfenster im Kraftfahrzeug. Dieses Fensterdreieck muß nicht notwendigerweise drei echte Spitzen haben, vielmehr können die Spitzen des Fensterdreiecks entsprechend der Geometrie des Fahrzeuges bzw. des Seitenfensters abgeflacht, abgerundet oder abgeschnitten sein. Als Fensterdreieck im Sinne dieser Erfindung ist deshalb der Teil des Fahrzeuges zu verstehen, an dem die vordere Kante des Seitenfensters geführt ist und die Fensteröffnung zur Fahrzeugfront hin abschließt. Bildet der Spiegelfuß und/oder die Spiegelfußkappe ein solches Fensterdreieck, ist es besonders günstig, wenn die Waschdüse im Bereich der nach oben gerichteten Spitze des Fensterdreiecks angeordnet ist. Auch hier gilt, daß die nach oben gerichtete Spitze des Fensterdreiecks keine echte Spitze sein muß, sondern auch abgerundet bzw. abgeflacht gestaltet sein kann. Durch die Anordnung der Waschdüse in diesem Bereich kann es in den meisten Fällen vermieden werden, daß zur Befestigung der Waschdüse die Größe des Fensterdreiecks vergrößert werden muß. Außerdem ergeben sich durch die Anordnung in diesem Bereich günstige Reinigungspositionen für das Spiegelelement.

Prinzipiell ist es gleichgültig, ob das Spiegelelement von Hand oder mit Hilfe von Antriebsmotoren zwischen der Normalposition und der Reinigungsposition verstellt wird. Um den Komfort beim Reinigen der Spiegelelemente zu erhöhen und insbesondere die Verschmutzungsgefahr für den Fahrer beim Verstellen zwischen den beiden Positionen auszuschließen, sollte das Spiegelelement vorzugsweise mit einer fernsteuerbaren Antriebseinheit zwischen der Normalposition und der Reinigungsposition verstellbar sein. Im Ergebnis wird es dadurch möglich, die Reinigung des Spiegelelements vornehmen zu können, ohne das Fahrzeug verlassen zu müssen.

Für viele Fahrzeugtypen ist in den Außenrückspiegeln ein Beiklappantrieb, beispielsweise ein elektrischer Beiklappantrieb, wie aus dem Stand der Technik bekannt, vorgesehen, mit dem das Gehäuse des Außenrückspiegels in eine karrosserienahe Beiklappposition geschwenkt werden kann. Dadurch wird der Außenrückspiegel vor Beschädigungen, beispielsweise durch vorbeifahrende Fahrräder oder Kraftfahrzeuge, geschützt. Da auch durch die bekannten Beiklappantriebe eine Relativbewegung des Spiegelelements zur Karosserie ausgeführt wird, ist es besonders vorteilhaft, wenn ein solcher Beiklappantrieb auch als Antriebseinheit zum Antrieb der erfindungsgemäßen Verstellung zwischen Reinigungsposition und Normalposition des Spiegelelements verwendet wird. Eine separate Antriebseinheit für diese Aufgabe kann dadurch entfallen.

Weist der Beiklappantrieb wie die aus dem Stand der Technik bekannten Beiklappantriebe lediglich eine Schwenkachse auf, so sind die Positioniermöglichkeiten für die Anordnung der Waschdüse stark eingeschränkt. Wird der Außenrückspiegel beim Beiklappen beispielsweise, wie normalerweise üblich, lediglich um eine Vertikalachse drehend verschwenkt, muß die Waschdüse in einem Bereich der Fahrzeugtür hinter dem Spiegelfuß angeordnet werden. Eine Anordnung in diesem Bereich ist zwar grundsätzlich möglich, beispielsweise im Fahrzeugblech, aber aufgrund der dafür erforderlichen Befestigungsmittel, beispielsweise dem Ausstanzen des Fahrzeugblechs, ungünstig. Dieses Problem kann gelöst werden, wenn das Gehäuse des Außenrückspiegels mit dem Beiklappantrieb um zumindest zwei Schwenkachsen verschwenkbar ist. Dadurch ergibt sich eine Vielzahl von Stellmöglichkeiten, so daß die Waschdüse an einem günstigen Ort positioniert werden kann und in Abhängigkeit dieser Position eine für die Reinigung günstige Reinigungsposition des Spiegelelements einstellbar ist.

Wird die Reinigungsdüse beispielsweise im Bereich der nach oben gerichteten Spitze eines Fensterdreiecks angeordnet, kann eine günstige Reinigungsposition des Spiegelelements dadurch eingestellt werden, daß das Gehäuse zunächst in konventionelle Weise um eine Vertikalachse verschwenkt und an die Karosserie angelegt und anschließend um eine Horizontalachse verschwenkt wird. Im Ergebnis verläuft die Spiegelebene in dieser Reinigungsposition von unten schräg nach oben und außen, wobei die Spiegelfläche nach oben gerichtet ist. In dieser Position kann das Spiegelelement effektiv von einem Wasserstrahl der im Fensterdreieck angeordneten Wasserdüse gereinigt werden.

In einer dazu alternativen Ausgestaltung ist nur eine einzige Schwenkachse eines Beiklappantriebs vorgesehen, die zur Vertikalachse geneigt verläuft. Dabei beträgt vorzugsweise der Neigungswinkel der Schwenkachse zwischen 30 und 60 Grad, insbesondere im wesentlichen in etwa 45 Grad. Dadurch kann zum einen ein im wesentlichen karosserienahes Beiklappen des Spiegels erreicht werden und zum anderen ermöglicht diese Spiegelposition, die gleichzeitig Reinigungsposition ist, eine montagegünstige Anordnung der Waschdüse im Bereich des Spiegelfußes.

Zur Erhöhung der Reinigungswirkung ist es vorteilhaft, pulsierende Waschdüsen einzusetzen, da mit derartigen Waschdüsen im wesentlichen der gesamte Bereich eines Spiegelglases erfaßt und gereinigt werden kann.

Um ein Einfrieren der Reinigungsflüssigkeit bei Temperaturen unter dem Gefrierpunkt zu verhindern, kann die Waschdüse beheizbar ausgeführt sein.

Die Reinigungswirkung der erfindungsgemäßen Anordnung kann auch dadurch erhöht werden, daß die Spiegeloberfläche mit einer hydrophoben und/oder schmutzabweisenden Schicht beschichtet ist, so daß insbesondere die Langzeitwirkung eines Reinigungsvorgangs vergrößert und das Lösen von Schmutzpartikeln von der Spiegelglasoberfläche erleichtert wird.

Nach einer weiteren Ausgestaltung der Erfindung ist die Waschdüse bzw. eine die Waschdüse mit der Reinigungsflüssigkeit versorgende Pumpe derart mit einer die Stellung des Seitenfensters, vor dem der Außenrückspiegel angeordnet ist, ermittelnden Einrichtung gekoppelt, daß eine Abgabe von Reinigungsflüssigkeit über die Waschdüse nur bei im wesentlichen geschlossenem Fenster erfolgt. Dadurch wird verhindert, daß bei der Reinigung des Rückspiegels Reinigungsflüssigkeit ins Innere des Fahrzeugs gelangt. Die die Stellung des Seitenfensters ermittelnde Einrichtung kann beispielsweise Teil eines elektrischen Fensterhebers sein.

Nachfolgend wird die Anordnung anhand einer lediglich eine bevorzugte Ausführungsform darstellender Zeichnung näher erläutert. Es zeigt:

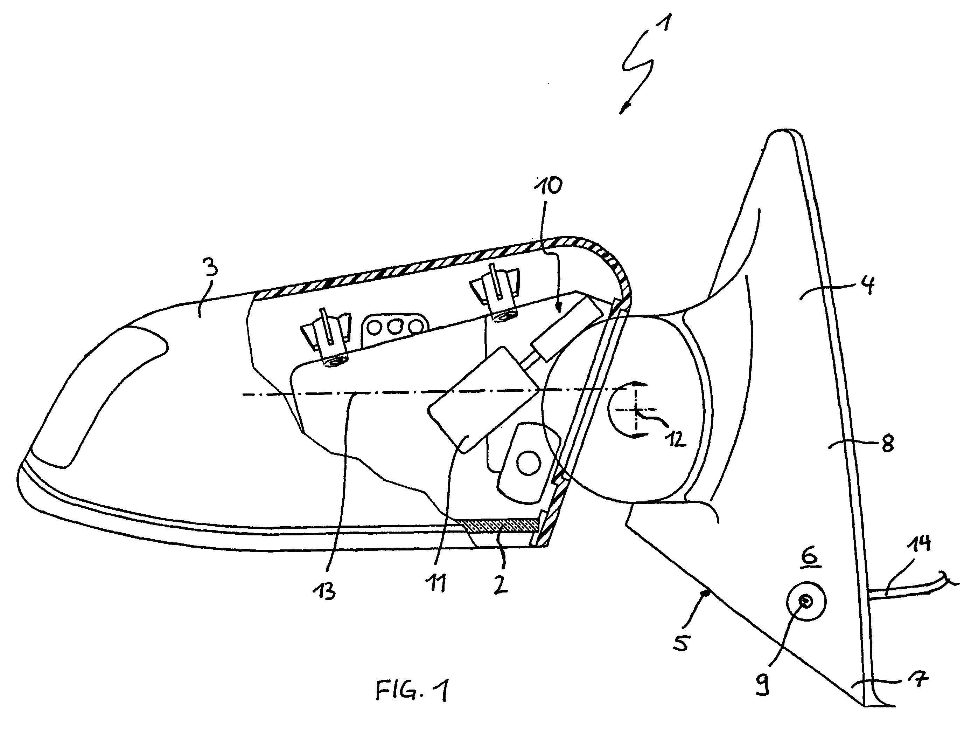

- **Fig. 1**: eine erfindungsgemäße Anordnung in perspektivischer Ansicht von oben.

Man erkennt in **Fig. 1** einen Außenrückspiegel 1 mit einem Spiegelelement 2, einem Spiegelgehäuse 3 und einem Spiegelfuß 4. Der Spiegelfuß 4 ist in der Art gestaltet, daß er das Fensterdreieck eines Seitenfensters bildet, wobei im Bereich der Kante 5 die Vorderkante der Seitenscheibe verläuft. Im Bereich 6 der nach oben gerichteten Spitze 7 des Fensterdreiecks 8 ist eine Waschdüse 9 angeordnet, aus der eine Reinigungsflüssigkeit abgestrahlt werden kann. Die dafür erforderliche Reinigungsflüssigkeit wird über einen lediglich teilweise dargestellten Schlauch 14 aus einem nicht dargestellten Reinigungsflüssigkeitssystem zur Waschdüse 9 gefördert. Der Außenrückspiegel 1 ist mit einem Beiklappantrieb 10 ausgestattet, durch den das Gehäuse 3 und das Spiegelelement 2 relativ zum Spiegelfuß 4 verschwenkt werden können. Durch Antrieb eines Antriebsmotors 11 wird eine Schwenkbewegung um die Vertikalachse 12 und durch den Antrieb eines zweiten, nicht dargestellten Antriebsmotors eine Schwenkbewegung um eine Horizontalachse 13 bewirkt. Die beiden Antriebsmotoren können dazu vom Fahrzeuginneren aus ferngesteuert werden.

Soll das Gehäuse 3 von der in **Fig. 1** dargestellten Normalposition in die Beiklapposition verfahren werden, wird nur der Antriebsmotor 11 angesteuert, so daß das Gehäuse 3 um die Vertikalachse 12 schwenkt und an die Karosserie des Fahrzeuges angelegt werden kann. Zum Erreichen der für die Reinigung des Spiegelelements 2 mit Hilfe der Waschdüse 9 erforderlichen Reinigungsposition wird nach Erreichen der Beiklapposition der zweite Antriebsmotor angesteuert und das Gehäuse 3 von der Beiklapposition um die Horizontalachse 13 schwenkend in die Reinigungsposition verfahren. In der Reinigungsposition weist die Spiegeloberfläche des Spiegelelements 2 nach oben, wobei das Spiegelelement von unten schräg nach oben und außen verläuft. In dieser Position ergibt sich ein günstiger Winkel zwischen der Spiegeloberfläche des Spiegelelements 2 und der Waschdüse 9, so daß das Spiegelelement 2 durch Aufbringung eines Flüssigkeitsstrahls effektiv gereinigt werden kann.

## Patentansprüche

1. Anordnung bestehend aus einem Außenrückspiegel (1) und einer Waschdüsen (9), zur Reinigung des Spiegelelements des Außenrückspiegels mit der Waschdüse (9), die im Bereich des Außenrückspiegels an einem Kraftfahrzeug angeordnet ist und aus der ein Strahl einer Reinigungsflüssigkeit abgegeben werden kann, wobei die Position des Spiegelelements (2) relativ zur Karosserie des Kraftfahrzeugs veränderbar ist,
**dadurch gekennzeichnet,**
**daß** die Waschdüse (9) ortsfest mit der Karosserie verbunden ist und das Spiegelelement (2) zumindest zwischen einer Normalposition, in der der nachfolgende Verkehr vom Fahrer im Spiegelelement (2) beobachtet werden kann, und einer Reinigungsposition, in der sich ein für die Reinigung günstiger Winkel zwischen der Spiegelebene des Spiegelelements (2) und dem Strahl der Reinigungsflüssigkeit ergibt, verstellbar ist.

2. Anordnung nach Anspruch 1,
**dadurch gekennzeichnet,**
**daß** die Waschdüse (9) an einem Spiegelfuß (4) und/oder an einer Spiegelfußkappe angeordnet ist.

3. Anordnung nach Anspruch 2,
**dadurch gekennzeichnet,**
**daß** der Spiegelfuß (4) und/oder die Spiegelfußkappe das Fensterdreieck (8) eines Seitenfensters bilden und die Waschdüse (9) im Bereich (6) der nach oben gerichteten Spitze (7) des Fensterdreiecks (8) angeordnet ist.

4. Anordnung nach einem der Ansprüche 1 bis 3,
**dadurch gekennzeichnet,**
**daß** das Spiegelelement mit einer fernsteuerbaren Antriebseinheit (10) zwischen der Normalposition und der Reinigungsposition verstellbar ist.

5. Anordnung nach Anspruch 4,
**dadurch gekennzeichnet,**
**daß** die Antriebseinheit nach Art eines Beiklappantriebs (10) ausgebildet ist, mit dem das Gehäuse (3) des Außenrückspiegels (1) in eine karosserienahe Beiklapposition verschwenkt werden kann.

6. Anordnung nach Anspruch 5,
**dadurch gekennzeichnet,**
**daß** die Schwenkachse (12) des Beiklappantriebs (10) im wesentlichen vertikal verläuft.

7. Anordnung nach Anspruch 5 oder 6,
**dadurch gekennzeichnet,**
**daß** das Gehäuse (3) des Außenrückspiegels (1) mit dem Beiklappantrieb (10) um zumindest zwei Schwenkachsen (12, 13) verschwenkbar ist.

8. Anordnung nach Anspruch 7,
**dadurch gekennzeichnet,**
**daß** der Außenspiegel (1) beim Verschwenken um die erste Schwenkachse (12) aus der Normalposition in die Beiklapposition und beim Verschwenken um beide Schwenkachsen (13) aus der Normalposition in die Reinigungsposition bringbar ist.

9. Anordnung nach Anspruch 5,
**dadurch gekennzeichnet,**
**daß** die Schwenkachse des Beiklappantriebs zur Vertikalachse geneigt verläuft.

10. Anordnung nach Anspruch 9,
**dadurch gekennzeichnet,**
**daß** der Neigungswinkel der Schwenkachse zwischen 30 und 60 Grad, insbesondere im wesentlichen in etwa 45 Grad, beträgt.

11. Anordnung nach einem der Ansprüche 1 bis 10,
**dadurch gekennzeichnet,**
**daß** eine pulsierende Waschdüse eingesetzt wird.

12. Anordnung nach einem der Ansprüche 1 bis 11,
**dadurch gekennzeichnet,**
**daß** die Waschdüse beheizbar ist.

13. Anordnung nach einem der Ansprüche 1 bis 12,
**dadurch gekennzeichnet,**
**daß** die Waschdüse bzw. eine die Waschdüse mit der Reinigungsflüssigkeit versorgende Pumpe derart mit einer die Stellung des Seitenfensters, vor dem der Außenrückspiegel angeordnet ist, ermittelnden Einrichtung gekoppelt sind, daß eine Abgabe von Reinigungsflüssigkeit über die Waschdüse nur bei im wesentlichen geschlossenem Fenster erfolgt.

14. Anordnung nach einem der Ansprüche 1 bis 13,
**dadurch gekennzeichnet,**
**daß** die Spiegeloberfläche mit einer hydrophoben und/oder schmutzabweisenden Schicht beschichtet ist.

## Claims

1. An arrangement comprising an outside rear view mirror (1) and a washing nozzle (9) for cleaning the mirror element of the outside rear view mirror by means of the washing nozzle (9), which is disposed in the region of the outside rear view mirror on a motor vehicle and from which a jet of a cleaning liquid may be discharged, whereby the position of the mirror element (2) is variable relative to the body of the motor vehicle,
**characterised in that**
the washing nozzle (9) is connected in a fixed manner to the body and the mirror element (2) is adjustable at least between a normal position, in which the driver may observe the traffic behind him in the mirror element (2), and a cleaning position, in which an advantageous angle for cleaning arises between the mirror plane of the mirror element (2) and the jet of cleaning liquid.

2. An arrangement according to claim 1,
**characterised in that**
the washing nozzle (9) is disposed on a mirror foot (4) and/or mirror foot cover.

3. An arrangement according to claim 2,
**characterised in that**
the mirror foot (4) and/or mirror foot cover form the window triangle (8) of a side window and the washing nozzle (9) is disposed in the region (6) of the upwardly directed point (7) of the window triangle (8).

4. An arrangement according to one of claims 1 to 3,
**characterised in that**
the mirror element is adjustable between the normal position and the cleaning position by means of a remote-controllable drive unit (10).

5. An arrangement according to claim 4,
**characterised in that**
the drive unit is designed in the manner of a fold-in mechanism (10), by means of which the housing (3) of the outside rear view mirror (1) may be swivelled into a folded-in position next to the body.

6. An arrangement according to claim 5,
**characterised in that**
the swivelling axis (12) of the fold-in mechanism (10) extends substantially vertically.

7. An arrangement according to claim 5 or 6,
**characterised in that**
the housing (3) of the outside rear view mirror (1) may be swivelled by the fold-in mechanism (10) about at least two swivelling axes (12, 13).

8. An arrangement according to claim 7,
**characterised in that**
the outside mirror (1) by swivelling about the first swivelling axis (12) is movable out of the normal position into the folded-in position and by swivelling about both swivelling axes (13) is movable out of the normal position into the cleaning position.

9. An arrangement according to claim 5,
**characterised in that**
the swivelling axis of the fold-in mechanism extends in an inclined manner relative to the vertical axis.

10. An arrangement according to claim 9,
**characterised in that**
the angle of inclination of the swivelling axis is between 30° and 60°, in particular substantially around 45°.

11. An arrangement according to one of claims 1 to 10,
**characterised in that**
a pulsating washing nozzle is used.

12. An arrangement according to one of claims 1 to 11,
**characterised in that**
the washing nozzle is heatable.

13. An arrangement according to one of claims 1 to 12,
**characterised in that**
the washing nozzle and/or a pump supplying the washing nozzle with the cleaning liquid are coupled in such a way to a device, which determines the position of the side window in front of which the outside rear view mirror is disposed, that a discharge of cleaning liquid through the washing nozzle is effected only when the window is substantially closed.

14. An arrangement according to one of claims 1 to 13,
**characterised in that**
the mirror surface is coated with a hydrophobic and/or dirt-repelling layer.

## Revendications

1. Dispositif constitué d'un rétroviseur extérieur (1) et d'une busette de lavage (9) permettant de nettoyer l'élément à miroir du rétroviseur extérieur (1) au moyen de la busette de lavage (9) qui est disposée dans la zone du rétroviseur extérieur sur un véhicule automobile et à partir de laquelle peut être émis un jet d'un liquide de nettoyage, la position de l'élément à miroir (2) par rapport à la carrosserie du véhicule automobile pouvant être modifiée,
**caractérisé en ce que**
la busette de lavage (9) est fixée à demeure à la carrosserie et **en ce que** l'élément à miroir (2) peut être réglé au moins entre une position normale, dans laquelle le trafic arrière peut être observé par le conducteur dans l'élément à miroir (2), et une position de nettoyage, dans laquelle il existe un angle favorable au nettoyage, entre le plan du miroir de l'élément à miroir (2) et le jet de liquide de nettoyage.

2. Dispositif suivant la revendication 1, **caractérisé en ce que** la busette de lavage (9) est disposée sur une base de miroir (4) et/ou sur un cache de base de miroir.

3. Dispositif suivant la revendication 2, **caractérisé en ce que** la base de miroir (4) et/ou le cache de base de miroir forment le triangle de fenêtre (8) d'une fenêtre latérale, et la busette de lavage (9) est disposée dans la zone (6) de la pointe (7) du triangle de fenêtre (8), orientée vers le haut.

4. Dispositif suivant l'une des revendications 1 à 3,
**caractérisé en ce que** l'élément à miroir peut être réglé, avec une unité d'entraînement (10) télécommandable, entre la position normale et la position de nettoyage.

5. Dispositif suivant la revendication 4,
**caractérisé en ce que** l'unité d'entraînement est réalisée sous la forme d'un entraînement en rabattement (10), avec lequel on peut faire pivoter le boîtier (3) du rétroviseur extérieur (1) dans une position rabattue près de la carrosserie.

6. Dispositif suivant la revendication 5,
**caractérisé en ce que** l'axe de pivotement (12) de l'entraînement en rabattement (10) a une direction essentiellement verticale.

7. Dispositif suivant la revendication 5 ou 6,
**caractérisé en ce que**
on peut faire pivoter le boîtier (3) du rétroviseur extérieur (1) avec l'entraînement en rabattement (10) autour d'au moins deux axes de pivotement (12, 13).

8. Dispositif suivant la revendication 7,
**caractérisé en ce que**
le rétroviseur extérieur (1), lors du pivotement autour du premier axe de pivotement (12), peut être placé de la position normale dans la position rabattue, et, lors du pivotement autour des deux axes de pivotement (13), peut être placé de la position normale dans la position de nettoyage.

9. Dispositif suivant la revendication 5,
**caractérisé en ce que**
l'axe de pivotement de l'entraînement en rabattement est incliné par rapport à l'axe vertical.

10. Dispositif suivant la revendication 9,
**caractérisé en ce que**
l'angle d'inclinaison de l'axe de pivotement est compris entre 30 et 60 degrés, en particulier a essentiellement une valeur d'environ 45°.

11. Dispositif suivant l'une des revendications 1 à 10,
**caractérisé en ce qu'**une busette de lavage à impulsions est installée.

12. Dispositif suivant l'une des revendications 1 à 11,
**caractérisé en ce que** la busette de lavage peut être chauffée.

13. Dispositif suivant l'une des revendications 1 à 12,
**caractérisé en ce que** la busette de lavage, ou respectivement une pompe alimentant en liquide de nettoyage la busette de lavage, sont couplées à un dispositif déterminant la position de la fenêtre latérale devant laquelle est installé le rétroviseur extérieur, de telle façon qu'une émission de liquide de nettoyage par la busette de lavage n'ait lieu qu'avec une fenêtre essentiellement fermée.

14. Dispositif suivant l'une des revendications 1 à 13,
**caractérisé en ce que** la surface du miroir est recouverte d'une couche hydrophobe et/ou anti-salissures.
